# EUROPÄISCHE PATENTANMELDUNG

(11) **EP 1 584 263 A1**
(43) Veröffentlichungstag der Anmeldung: **12.10.2005**
(21) Anmeldenummer: 04008688.6
(22) Anmeldetag: 10.04.2004
(51) Int. Cl.: A46B 15/00, A46B 13/02, A61C 17/22

(54) **Zahnbürste und Verfahren zur Herstellung einer Zahnbürste**

(71) Anmelder: Trisa Holding AG, 6234 Triengen (CH)
(72) Erfinder: Pfenniger, Philipp, 6234 Triengen (CH); Fischer, Franz, 6234 Triengen (CH)
(74) Vertreter: Schaad, Balass, Menzl & Partner AG

(57) **Zusammenfassung**

Die Erfindung betrifft eine Zahnbürste mit einem Körper, der einen Griffbereich, einem eine Reinigungsstruktur (14), insbesondere eine Mehrzahl von Borsten (16), tragenden Kopfbereich (10) mit einer Längsachse (L) und einen dazwischen liegenden Halsbereich (12) aufweist, und mit einer im Kopfbereich (10) angeordneten, den Kopfbereich (10) in Schwingung versetzenden mechanischen Vibrationsvorrichtung (18), die einen Motor mit einem exzentrisch zu einer Drehachse (D) angeordneten Schwungkörper (36) umfasst. Erfindungsgemäss schliesst die Drehachse (D) mit der Längsachse (L) des Kopfbereichs (10) einen Winkel von wenigstens 60° und höchstens 120° ein. Vorzugsweise wird zur Realisierung eines möglichst kleinen Kopfes eine Vibrationsvorrichtung in Form eines Flachmotors verwendet.

## Beschreibung

Die Erfindung betrifft eine Zahnbürste mit den Merkmalen von Anspruch 1 sowie ein Verfahren zur Herstellung einer solchen Zahnbürste mit den Merkmalen von Anspruch 15.

Eine Zahnbürste mit den Merkmalen des Oberbegriffs von Anspruch 1 ist aus der WO-A 01/28452 bekannt. Die Zahnbürste hat einen Kopfbereich, einen Griffbereich und einen dazwischen liegenden, leicht verjüngten Halsbereich. Im Kopf- oder Halsbereich ist eine Vibrationsvorrichtung angeordnet, mit der im Betrieb wenigstens der Kopfbereich in Vibration versetzt werden kann zur Verstärkung der Reinigungswirkung. Eine Batterie als Energiequelle für den Antrieb der Vibrationsvorrichtung befindet sich in einer Ausnehmung im Griffbereich. Die Vibrationsvorrichtung umfasst einen Motor mit einem Schwungkörper, dessen Schwerpunkt exzentrisch zu einer Drehachse angeordnet ist und der um diese Drehachse gedreht wird. Die Drehachse ist parallel zur Längsachse der Zahnbürste ausgerichtet. Diese Konstruktion führt dazu, dass der Kopfbereich verhältnismässig dick ist, wenn die Vibrationsvorrichtung im Kopfbereich angeordnet wird. Denn der Kopfbereich muss wenigstens eine Dicke haben, die der radialen Ausdehnung der Vibrationsvorrichtung zuzüglich des Materialbereichs, der zur Halterung der Borsten bzw. sonstiger Reinigungselemente notwendig ist, entspricht. Da dieses zu Abmessungen des Bürstenkopfes führt, die die hinteren Backenzähne nicht mehr oder nur schwer erreichbar machen, wird die Vibrationsvorrichtung in der Praxis im Halsbereich vor dem Kopfbereich mit der Reinigungsstruktur angeordnet. Hierdurch werden jedoch Schwingungen vermehrt auch auf den Handgriff übertragen, was unerwünscht ist. Des weiteren führt die Bewegung des Schwungkörpers um die Dreh- bzw. Längsachse im Anwendungsfall zu einer Vor- und Zurückbewegung des Bürstenkopfes relativ zum Zahn. Erwünscht ist jedoch eine Bewegung parallel zur Zahnoberfläche.

Der Erfindung liegt daher die Aufgabe zugrunde, die bekannte Zahnbürste derart weiterzuentwickeln, dass die genannten Probleme vermieden, insbesondere die Abmessungen des Kopfbereichs und die auf den Griffbereich übertragenen Schwingungen vermindert werden können. Des weiteren soll ein Verfahren zur Herstellung einer solchen Zahnbürste angegeben werden.

Die Aufgabe wird durch eine Zahnbürste mit den Merkmalen von Anspruch 1 sowie ein Verfahren mit den Merkmalen von Anspruch 15 gelöst. Vorteilhafte Weiterbildungen sind in den abhängigen Ansprüchen, der Beschreibung und den Zeichnungen angegeben.

Unter Kopfbereich wird im Folgenden der Bereich verstanden, der die Reinigungsstruktur trägt. Unter Frontfläche des Kopfbereichs wird die Fläche verstanden, an der die Reinigungsstruktur, insbesondere Borsten und/oder weichelastische Elemente, angebracht ist. Der Griffbereich ist der Bereich, der im Anwendungsfall vom Benutzer gegriffen wird. Hier befindet sich auch ein Energiespeicher zur Versorgung der Vibrationsvorrichtung. Der Halsbereich ist der zwischen Kopf- und Griffbereich gelegene Bereich. In ihm sind elektrische Verbindungsleitungen zwischen Energiespeicher und Vibrationsvorrichtung untergebracht.

Die gattungsgemässen Zahnbürste wird erfindungsgemäss derart weiterentwickelt, dass die Drehachse des Schwungkörpers (Exzenter) mit der Längsachse des Kopfbereichs einen Winkel von wenigstens 60° und höchstens 120°, vorzugsweise etwa 90°, einschliesst. Insbesondere in Kombination mit einem sogenannten Flachmotor als Vibrationsvorrichtung gelingt die Integration der Vibrationsvorrichtung in den Kopfbereich, ohne dass die Abmessungen des Kopfbereichs gegenüber denen einer herkömmlichen Zahnbürste ohne Vibrationsvorrichtung wesentlich vergrössert werden müssen. Bei einem sogenannten Flachmotor befinden sich der eigentliche Motor und der Exzenter in einer flachen, insbesondere zylinderförmigen Hülse, deren Höhe H (Abmessung entlang der Drehachse) kleiner, vorzugsweise um ein Vielfaches kleiner, sind als die Breite B (Abmessung in radialer Richtung).

Es können beispielsweise sogenannte Coin motors bzw. Flachmotoren der Firma K'OTL Jinlong China (Nr. C1234L-38, C1034L-50, C1030L1-50) verwendet werden. Diese haben Masse von B=10-12mm und H=3-4 mm. Die Ausdehnung entlang der Drehachse ist daher deutlich geringer als die typischer Exzentermotoren, wie beispielsweise in WO-A 01/28452 gezeigt. Die dortige Längsausdehnung beträgt 12-20 mm.

Vorzugsweise beträgt die Dicke des Kopfbereichs im Bereich der Vibrationsvorrichtung in einer Richtung senkrecht zur Längsachse höchstens 15 mm, vorzugsweise höchstens 12 mm. In einer weiteren vorteilhaften Weiterbildung beträgt die im Bereich der Vibrationsvorrichtung in einer Richtung senkrecht zur Längsachse gemessene Dicke der Vibrationsvorrichtung 25-75% der in derselben Richtung gemessenen Dicke des Kopfbereichs. Vorzugsweise nimmt die Vibrationsvorrichtung wenigstens 10% und höchstens 50% des Volumens des Kopfteils ohne die Reinigungsstruktur und/oder wenigstens 10% und höchstens 50% des Gewichts des Kopfteils einschliesslich der Reinigungsstruktur ein. Diese Vorgaben lassen sich jeweils durch die Verwendung des oben beschriebenen Flachmotors erfüllen.

Durch die erfindungsgemässe Anordnung der Vibrationsvorrichtung wird im Anwendungsfall in vorteilhafter Weise eine Bewegung des Kopfbereichs erzeugt, die im wesentlichen parallel zur Frontfläche des Kopfbereichs verläuft, insbesondere entlang der Längsachse sowie senkrecht zur Längsachse.

Die Vibrationseinrichtung ist vorzugsweise in einer Ausnehmung im Kopfbereich angeordnet, die durch ein Deckelement insbesondere wasserdicht verschlossen sein kann. Vorteile bei der Herstellung ergeben sich, wenn das Deckelement wenigstens einen Teil der Reinigungsstruktur trägt. Zwischen Deckelement und Motor ist vorzugsweise ein Abstand von mindestens 0,05 mm im verschlossenen und verschweissten Zustand. Hierdurch ist gewährleistet, dass der Schliessvorgang (insbesondere Ultraschallschweissen) durchgeführt werden kann, ohne dass sich die Bauteile gegenseitig blockieren.

Alternativ zum Deckelement kann der Motor auch mit einem weiteren Kunststoff, insbesondere einer Weichkomponente, umspritzt und dadurch abgedichtet und gegen mechanische Einwirkungen geschützt sein.

In einer vorteilhaften Weiterbildung der Erfindung sind die Umdrehungsfrequenz des Motors und die Länge, die Form und das Material der Reinigungsstruktur derart aneinander angepasst gewählt, dass wenigstens ein Teil der Reinigungsstruktur beim Betreiben der Vibrationseinrichtung in Resonanz gerät.

Die erfindungsgemässe Zahnbürste wird vorzugsweise nach dem in der nicht vorveröffentlichten internationalen Patentanmeldung Nr. PCT/EP03/009681 beschriebenen Verfahren hergestellt. Gemäss dieser Anmeldung wird zunächst eine als Festigkeitsträger dienende Hartkomponente im Spritzgussverfahren hergestellt und anschliessend wenigstens eine weitere Kunststoffkomponente, insbesondere eine Weichkomponente, angespritzt. Mit der weiteren Kunststoffkomponente werden elektrische Funktionsbauteile wenigstens teilweise umspritzt sowie, falls vorhanden, weiterer Strukturen, z.B. Reinigungselemente, Griffabdeckung, hergestellt. Vorliegend ist von Vorteil, wenn zumindest die elektrischen Versorgungsleitungen an die Hartkomponente angelegt und durch Anspritzen der weiteren Kunststoffkomponente fixiert werden. Bezüglich des Herstellungsverfahrens und seiner Varianten wird auf die PCT/EP03/009681 verwiesen. Aus dieser Anmeldung ergeben sich auch bevorzugte Materialien sowie verschiedene Möglichkeiten zur Gestaltung des Zahnbürstenkörpers.

Anstelle oder zusätzlich zur Vibrationseinrichtung kann eine andere elektrische Funktionskomponente vorhanden sein, z.B. ein Licht emittierendes elektrisches Bauteil, ein Sensor (zur Temperatur-, PH-Wert-, Blutzuckerwertmessung, Bakterienanalyse, etc.) und/oder eine chemische Substanz abgebendes elektrisches Bauteil.

Die Erfindung wird im Folgenden beispielhaft unter Bezugnahme auf die Zeichnung beschrieben. Es zeigen:
- Fig. 1a-h: Ansichten des Kopf- und Halsbereichs einer Zahnbürste in verschiedenen Herstellungsstadien;
- Fig. 2a-d: der Kopfbereich sowie verschiedene Komponenten der Zahnbürste aus Fig. 1a-g;
- Fig. 3: den Kopfbereich der Zahnbürste aus Fig. 1h;
- Fig. 4a+b: verschiedene Komponenten einer weiteren Zahnbürste;
- Fig. 5a-g, 6a-g: Ansichten des Kopf- und Halsbereichs einer weiteren Zahnbürste in verschiedenen Herstellungsstadien;
- Fig. 7a-g, 8a+b: Ansichten des Kopf- und Halsbereichs einer weiteren Zahnbürste in verschiedenen Herstellungsstadien;
- Fig. 9a-f, 10a+b: Ansichten des Kopf- und Halsbereichs einer weiteren Zahnbürste in verschiedenen Herstellungsstadien;
- Fig. 11a-g, 12: Ansichten des Kopf- und Halsbereichs einer weiteren Zahnbürste in verschiedenen Herstellungsstadien.

Die Figuren zeigen verschiedene Varianten einer erfindungsgemässen Zahnbürste, von der jeweils nur der Kopfbereich 10 und Halsbereich 12 dargestellt ist, sowie verschiedene Möglichkeiten zu ihrer Herstellung. Bei allen Varianten wird ein Flachmotor als Vibrationsvorrichtung 18 in eine Ausnehmung 20 im Kopfteil 10 eingesetzt, so dass sich der Flachmotor 18 in unmittelbarer räumlicher Nähe zu einer ebenfalls am Kopfteil 10 angebrachten, konventionelle Borsten 16 und/oder weichelastische Reinigungselemente 34 umfassenden Reinigungsstruktur 14 befindet. Auf diese Weise können im Kopfteil 10 und in der Reinigungsstruktur 14 gezielt Schwingungen erzeugt werden, die sich aufgrund des vergrösserten Abstands nur gedämpft auf den nicht dargestellten Griffbereich und die Hand des Benutzers übertragen.

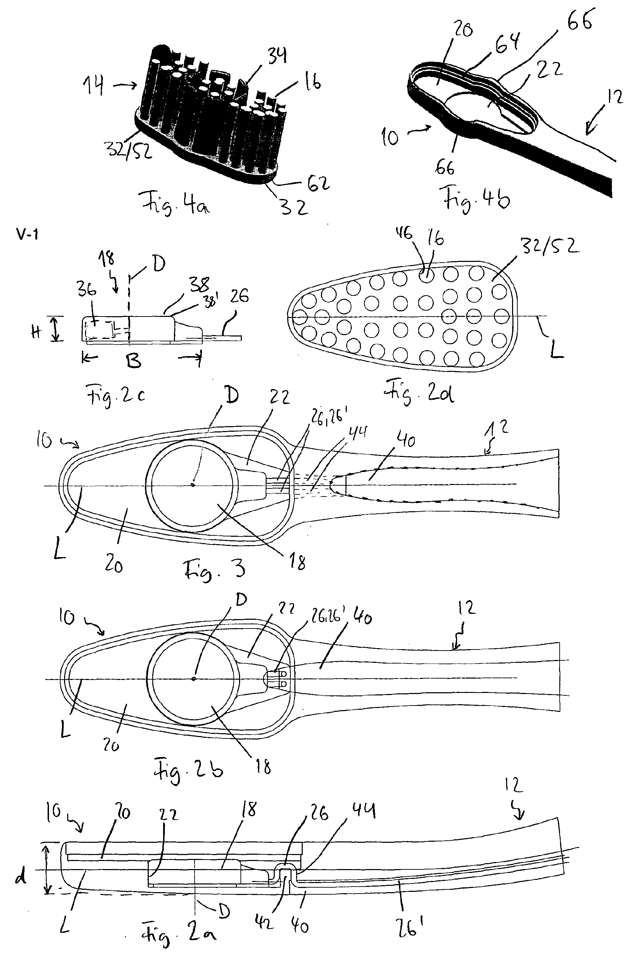

Die Integration der Vibrationsvorrichtung 18 in das Kopfteil 10 ohne störende Vergrösserung der Abmessungen des Kopfteils 10 wird ermöglicht durch die Verwendung eines Flachmotors, wie beispielsweise in Fig. 2c dargestellt. Ein um eine Drehachse D angetriebener Schwungkörper (Exzenter) 36 befindet sich zusammen mit einem Antrieb (nicht dargestellt) in einer flachen, zylinderförmigen Hülse 38, deren Höhe H mit 3-4 mm kleiner ist als ihre Breite B mit 12-20 mm. Elektrische Verbindungsleitungen 26 zum Anschluss an eine Energiequelle treten aus der Hülse 38 aus.

Bei allen Varianten ist die Drehachse D im wesentlichen senkrecht zur die Reinigungsstruktur 14 tragenden Frontfläche 28 des Kopfteils 10 orientiert. Somit wird beim Betrieb der Vibrationsvorrichtung 18 eine Bewegung der Reinigungsstruktur 14 im wesentlichen in der Ebene der Frontfläche 28 erzeugt. Hierdurch wird eine verbesserte Putz- und Massagewirkung erzielt.

Im folgenden werden die einzelnen Herstellungs- und Gestaltungsvarianten beschrieben:

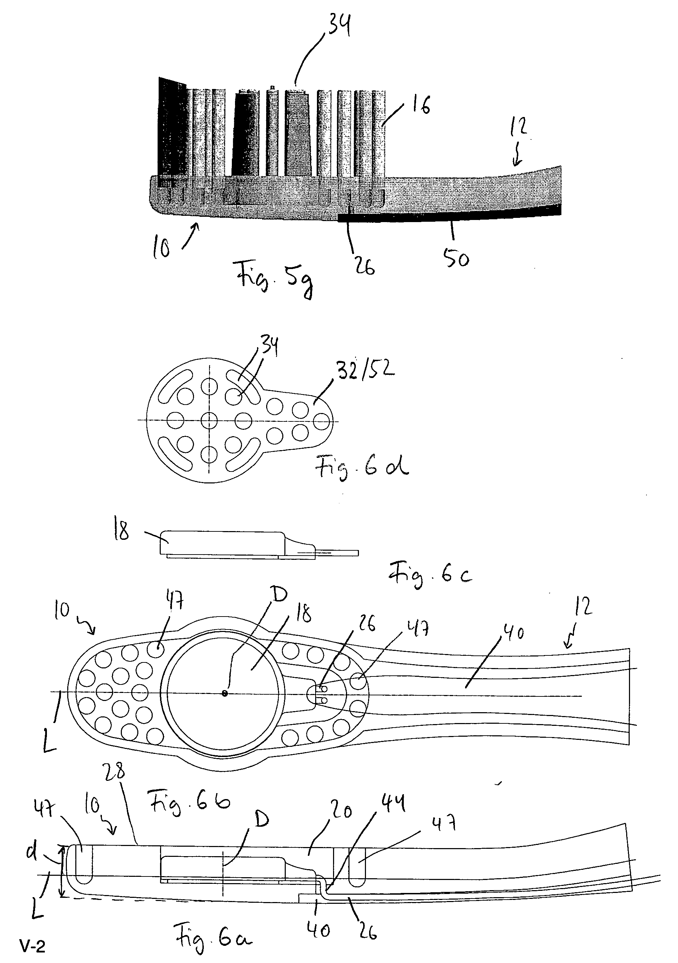

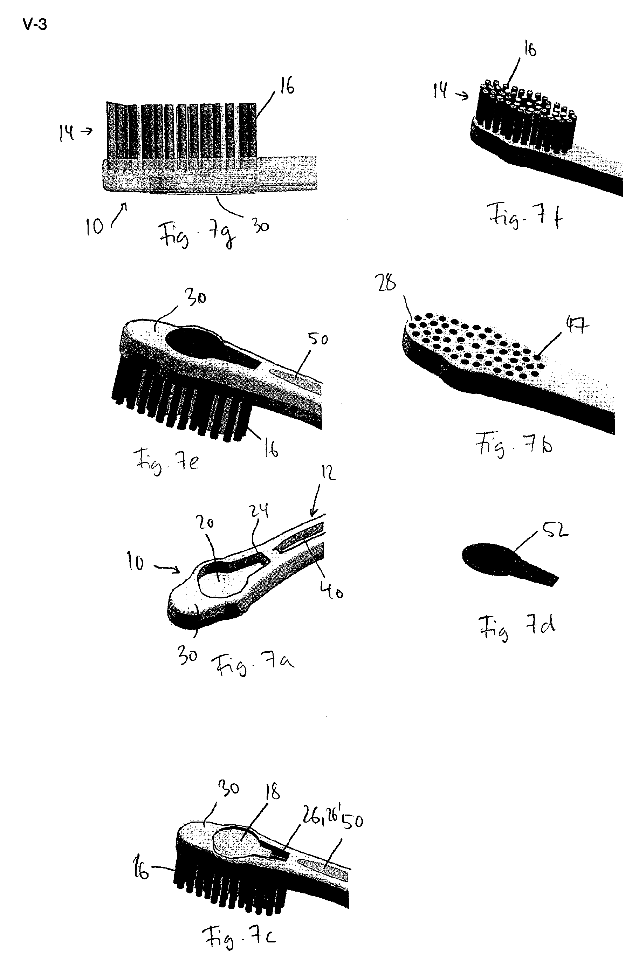

Bei Variante 1 (Fig. 1a-h, 2a-c, 3, 4a+b) wird die Vibrationsvorrichtung 18 von der borstentragenden Frontseite 28 montiert. Die Abdichtung der Aussparung 20 erfolgt mittels einer als Deckelement 52 dienenden Trägerplatte 32, die zuvor im AFT-Verfahren (Anchor Free Tufting, z.B. gemäss EP-A 1 310 187) beborstet wurde. Die Trägerplatte 32 ohne Borsten ist in Fig. 2d, mit Borsten in Fig. 1d und 4a (dort zusätzlich mit weichelastischen Reinigungselementen 34) dargestellt. Beim AFT-Verfahren werden Borsten durch Aussparungen 46 in der Trägerplatte 32 geführt und an ihren rückwärtigen Enden miteinander verschmolzen. Anschliessend wird die Ausnehmung 20 mittels der Trägerplatte 32 wasserdicht verschlossen, insbesondere mittels Ultraschallschweissen. Der Schweissrand 62 der Trägerplatte 32 kann tiefer liegen als die Oberseite 38' der Vibrationsvorrichtung 18. Die Ausnehmung 20 kann eine umlaufende Anlagefläche 64 für den Schweissrand 62 haben.

Da bei AFT keine zusätzlichen Verankerungsmittel notwendig sind, kann die Trägerplatte 32 sehr dünn - einschliesslich der Borstenschmelze mit ca. 1-2 mm Dicke - ausgeführt werden. Das Beborsten mittels AFT ermöglicht somit neben verbesserten Gestaltungsmöglichkeiten für die Anordnung der Borsten die Minimierung der Dicke d des Kopfteils 10. Bei einer Dicke der Trägerplatte 32 von 1-2 mm und der Vibrationsvorrichtung 18 von 3-4 mm sowie einer Dicke des Bodens der Aussparung von 1-3 mm beträgt die Kopfdicke d gemessen im Zentrum der Vibrationsvorrichtung ca. 5-9 mm.

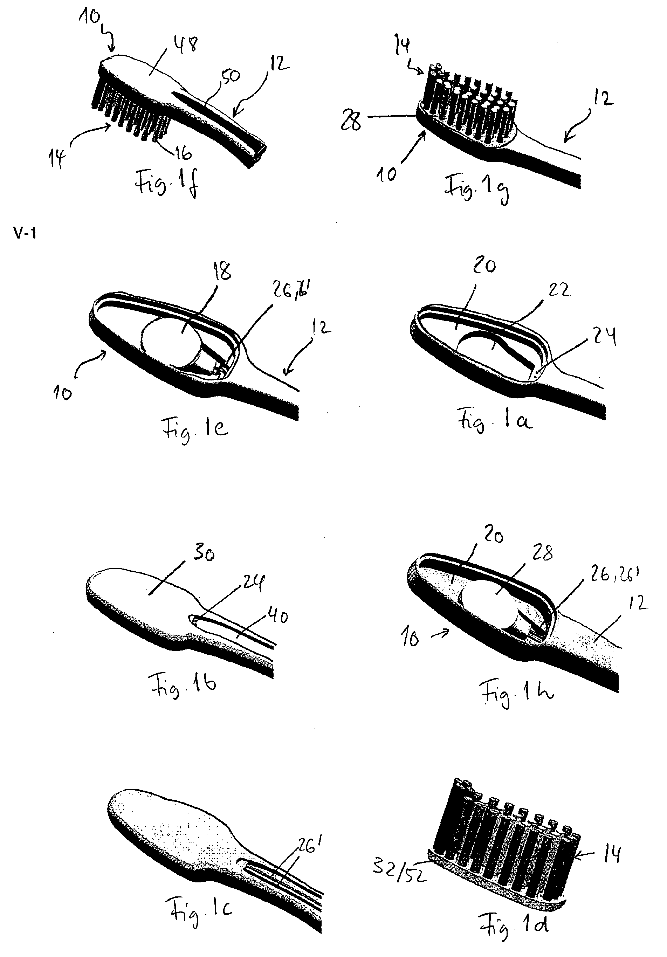

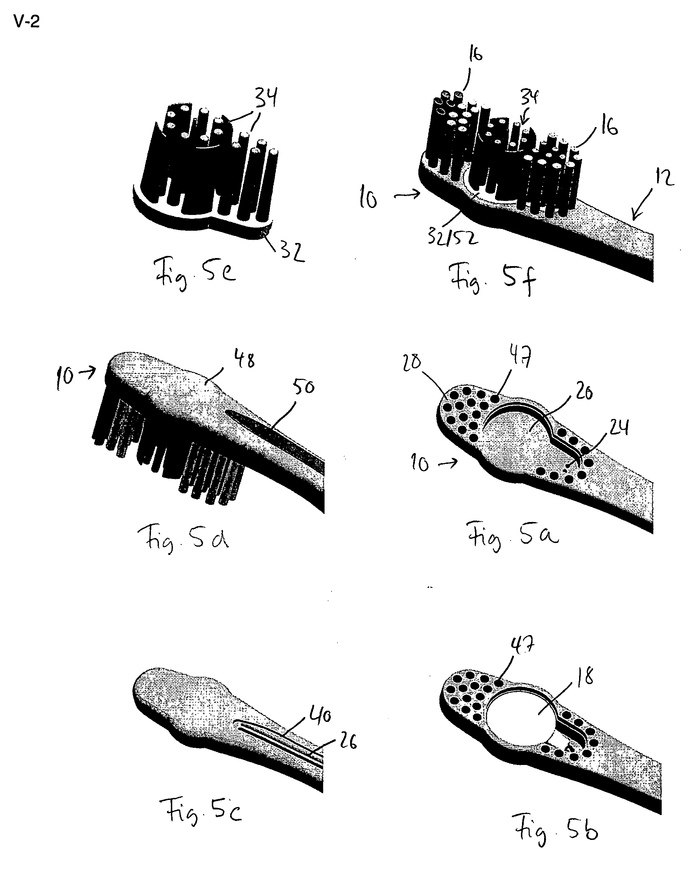

Zur Herstellung einer Zahnbürste gemäss Variante 1 wird zuerst wie in PCT/EP03/009681 beschrieben die Hartkomponente 48 des Bürstenkörpers im Spritzgussverfahren hergestellt. Dabei werden folgende Strukturen gebildet: im Griffbereich eine Ausnehmung für einen Energiespeicher (nicht dargestellt); im Kopfbereich 10 eine zur borstentragenden Seite offene Ausnehmung 20 für die Vibrationsvorrichtung 18, insbesondere mit einer an die Form der Vibrationsvorrichtung 18 angepassten Vertiefung 22 zum passgenauen Einsetzen und Fixieren der Vibrationsvorrichtung 18 (Fig. 1a, Fig. 4b); im Halsbereich 12 an der Rückseite der Zahnbürste ein Kanal 40 für Verbindungsleitungen 26' (Fig. 1b, 1c); im Grenzbereich zwischen Kopf und Hals Verbindungslöcher 44 zwischen dem Kanal 40 und der Ausnehmung 20 im Kopf. Die Verbindungslöcher 44 können, wie in Fig. 1h oder 3 dargestellt, in Richtung der Längsachse L der Zahnbürste bzw. des Kopfteils 10 verlaufen. Dazu wird ein geeigneter Schieber in die Spritzgiessform eingebracht. Vorteile bei der Entformung hat jedoch die in Fig. 1a, 1e, 2a, 2b gezeigte Variante, bei der sich ein Steg 42 zwischen der Ausnehmung 20 und dem Kanal 40 befindet, an den angrenzend sich die Verbindungslöcher 44 in einer Orientierung senkrecht zur Frontfläche 28 befinden. Elektrische Verbindungsleitungen 26', die später mit den Anschlüssen 26 der Vibrationsvorrichtung 18 verbunden werden, werden über den Steg 42 durch die Löcher 44 zum Kanal 40 geführt.

In einem zweiten Herstellungsschritt werden elektrische Leitungen 26' und eventuell weitere elektrische Bauteile an der Hartkomponente 48 des Bürstenkörpers montiert (Fig. 1c). Die Ausnehmung 20 im Kopf 10 wird dabei vorteilhaft mittels der elektrischen Leitungen 26' abgedichtet. Optional kann auch die Vibrationseinrichtung 18 bereits eingesetzt werden (Schritt 4 - 5 entfällt in diesem Fall).

In einem dritten Herstellungsschritt wird der Bürstenkörper mit den montierten Bauteilen mit dem zweiten Kunststoff, vorzugsweise mit einer Weichkomponente 50, überspritzt. Der Kanal 40 wird geschlossen und die Leitungen 26' somit fixiert. Gleichzeitig werden eventuell vorhandene Strukturelemente aus Weichmaterial hergestellt, z.B. Griffbelag, Dämpfungselemente.

In einem vierten Herstellungsschritt wird die Vibrationsvorrichtung in die Ausnehmung 20 eingesetzt. Die Anschlussleitungen 26 der Vibrationsvorrichtung 18 werden mit den elektrischen Leitungen 26' verbunden, z.B. durch Löten oder mechanische Verbindungsverfahren (Fig. 1e, 1h, 2a, 2b, 3).

Optional kann in einem fünften Herstellungsschritt eine wasserdichte Schutzschicht über die Vibrationsvorrichtung 18 angebracht werden, z.B. indem die Aussparung mit (Kunst-)Harz, Silikon, Polyurethan (PUR) etc. ausgegossen wird.

In einem sechsten Herstellungsschritt wird die zuvor mittels AFT beborstete Trägerplatte 32 (Fig. 1d, 4a) auf die Aussparung 20 aufgesetzt und die Nahtstellen verschweisst (Fig. 1f, 1g).

Die Kopfform kann am dem Griff abgewandten Ende leicht zugespitzt sein, wie in Fig. 1a-h, 2b+d, 3 dargestellt. Die Vibrationsvorrichtung 18 wird in der dem Griff zugewandten Hälfte des Kopfteils 10 angeordnet, die eigentliche Spitze bleibt leer.

Um das Kopfteil 10 schlanker zu gestalten, kann eine Kopfform mit an die Form der Vibrationsvorrichtung angepassten seitlichen Ausbuchtungen 66 gebildet werden, wie in Fig. 4a, b dargestellt. Bei diesem Beispiel ist die Trägerplatte 32 an die Form der Ausbuchtungen 66 angepasst. In der darauf angeordneten Reinigungsstruktur 14, insbesondere der kreisförmigen Anordnung von weichelastischen Reinigungselementen 34, setzt sich diese Form optisch fort.

Bei Variante 2 (Fig. 5a-g, 6a-d) wird die Vibrationsvorrichtung 18 ebenfalls auf der borstentragenden Seite des Kopfteils 10 montiert. Ein Deckelement 52 verschliesst die der Ausnehmung 20 für die Vibrationsvorrichtung 18, das als Trägerelement 32 für eine Reinigungsstruktur aus ausschliesslich gummielastischen Reinigungselementen 34 dient. Das Trägerelement besteht vorzugweise aus einer im Zweikomponenten-Spritzgiessverfahren hergestellten Hart-Weich-Kombination, und wird z.B. wie in WO 03/055351 beschrieben nach der Herstellung des Körpers mit diesem unlösbar verbunden. Zur Halterung von solchen Reinigungselementen 34 ist nur eine Dicke des Trägerelements 32 von 1-2 mm notwendig. Neben der Ausnehmung 20 sind gewöhnliche Borstenbündel 16 direkt im Kopfteil 10 verankert. Auf diese Weise gelingt auch bei konventioneller Beborstung, die eine gewisse Verankerungstiefe verlangt, z.B. konventionelles Stopfen oder IMT (In Mould Tufting: Umspritzen von Borstenenden bei der Herstellung der Hartkomponente), eine Zahnbürste mit im Kopfteil 10 integrierter Vibrationsvorrichtung 18 und minimaler Kopfdicke von 5-9 mm, die sich aus der Dicke der Trägerplatte 32 (1-2 mm), der Vibrationsvorrichtung (3-4 mm) und des Kopfteils am Boden der Aussparung 20 (1-3 mm) zusammensetzt. Alternativ kann der restliche Bürstenkopf auch mittels AFT beborstet werden.

Zur Herstellung einer Zahnbürste gemäss Variante 2 wird zuerst wie bei Variante 1 die Hartkomponente 48 des Bürstenkörpers mit Ausnehmung 20, Verbindungslöchern 44, Kanal 40 im Spritzgussverfahren hergestellt. Zusätzlich werden in der Frontfläche 28 seitlich von der Ausnehmung 20 Verankerungslöcher 47 für Borsten gebildet (Fig. 5a). Bei IMT sind keine Verankerungslöcher 47 notwendig, stattdessen werden die Borsten bei der Herstellung der Hartkomponente mit dieser umspritzt und dadurch fixiert.

In einem zweiten Schritt werden wie bei Variante 1 die elektrischen Leitungen 26' und eventuell andere elektrische Bauteile an der Hartkomponente 48 angebracht. Die Leitungen 26' schliessen die Verbindungslöcher 44 und dichten die Ausnehmung 20 im Kopf 10 im nachfolgenden Verfahrensschritt (Spritzen einer weiteren Komponente) ab (Fig. 5c).

In einem dritten Schritt wird der Körper wie bei Variante 1 mit einem zweiten Kunststoff, vorzugsweise einer Weichkomponente 50, überspritzt (Fig. 5d).

In einem vierten Schritt wird die Vibrationsvorrichtung 18 wie bei Variante 1 in die Ausnehmung 20 eingesetzt und an die Leitungen 26' angeschlossen (Fig. 5b).

Optional wird in einem fünften Schritt eine wasserdichten Schutzschicht über die Vibrationsvorrichtung 18 angebracht (siehe Variante 1).

Die als Deckelement 52 dienende Trägerplatte 32 wird mit weichelastischen Reinigungselementen 34 vorzugsweise im Zweikomponenten-Spritzgiessverfahren versehen (Fig. 6d: Platte 32 mit Reinigungselementen in Ansicht von oben; Fig. 5e Platte 32 mit Reinigungselementen 34), auf die Ausnehmung 20 aufgesetzt und wasserdicht mit dem Kopfteil 10 verbunden, insbesondere mittels Ultraschallschweissen. Das übrige Kopfteil 10 kann vor oder nach dem Verbinden mit weiteren Borsten 16 versehenen werden. Die fertige Zahnbürste ist in Fig. 5d, 5f, 5g gezeigt. Fig. 6b zeigt eine Aufsicht auf das unbeborstete Kopfteil 10 mit eingesetzter Vibrationsvorrichtung 18, Fig. 6a dasselbe Kopfteil 10 im Schnitt entlang der Längsachse L. Die Form der Aussparung wurde wie auch bei Variante 1 so gewählt, dass die Drehachse D senkrecht auf der Längsachse L und auf der Frontfläche 28 steht.

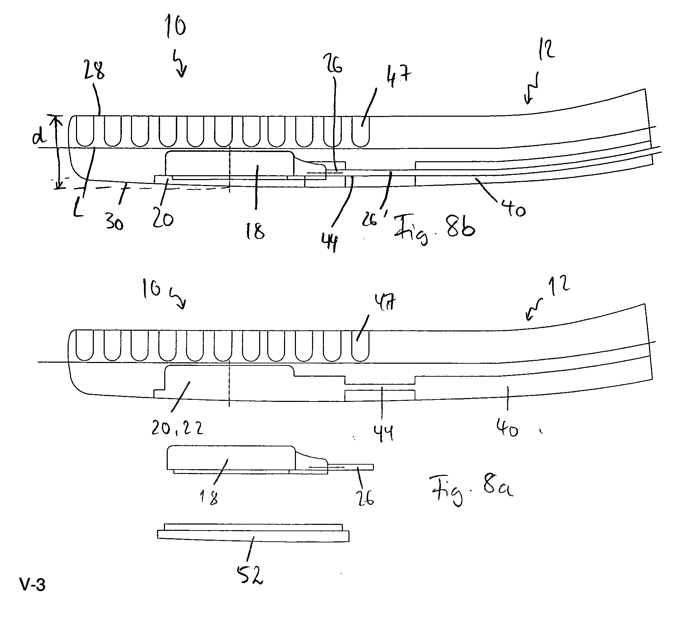

Bei Variante 3 (Fig. 7a-g, 8a,b) wird die Vibrationsvorrichtung 18 auf der borstenabgewandten Rückseite 30 des Kopfteils 10 eingesetzt. Vorzugsweise kommt IMT oder konventionelle Beborstung zum Einsatz. IMT erlaubt eine minimale Verankerungstiefe von 1-2 mm. Die konventionelle Verankerung der Borsten ergibt grössere Kopfdicken, was möglich, aber weniger bevorzugt ist. Die gesamte Kopfdicke d von 5-8 mm bei IMT-Beborstung gemessen im Zentrum der Vibrationsvorrichtung setzt sich wie folgt zusammen: Verankerungstiefe IMT 1-2 mm, Vibrationsvorrichtung 3-4 mm, Deckelement 52 1-2 mm (zum Vergleich konventionelles Stopfen: Verankerungstiefe 4-5 mm + Vibrationsvorrichtung 3-4 mm + Deckelement 1-2 mm = Kopfdicke d gemessen im Zentrum der Vibrationsvorrichtung 8-11 mm).

Die Öffnung der Ausnehmung 20 auf der Kopfrückseite 30 wird mit einem Deckelement 42 wasserdicht verschweisst.

Zur Herstellung einer Zahnbürste gemäss Variante 3 wird wie bei Varianten 1 und 2 der Zahnbürstenkörper durch Spritzen der Hartkomponente 48 hergestellt (Fig. 7a). Bei IMT Beborstung werden die Borsten dabei umspritzt. Gleichzeitig werden die zur Rückseite 30 hin offene Ausnehmung 20 sowie der Kanal 40 hergestellt und Verbindungslöcher 44 dazwischen ausgeformt. Wie bereits geschildert, werden Leitungen 26' angebracht und der Körper mit dem zweiten Kunststoff, vorzugsweise der Weichkomponente 50, umspritzt.

Nur bei konventionellem Stopfen folgt das Beborsten des Kopfes 10 an der Frontfläche 28 (ohne Ausnehmung). Dazu sind in der Frontfläche 28 Verankerungslöcher 47 ausgeformt (Fig. 7b, 8a,b).

Die Vibrationsvorrichtung 18 wird in die Ausnehmung 20 an der Rückseite 30 eingesetzt und an die elektrischen Leitungen 26' angeschlossen, wobei optional wieder eine wasserdichte Schutzschicht über der Vibrationsvorrichtung hergestellt werden kann. Die Ausnehmung 20 wird auf der borstenabgewandten Rückseite 30 mit einem Deckelement 52 (Fig. 7d) wasserdicht verschlossen, z.B. mittels Ultraschallschweissen.

Wie in Fig. 8a, b dargestellt, verläuft das Verbindungsloch 44 für die Leitungen 26, 26' parallel zur Längsachse L. Die Leitungen 26' werden zuerst montiert, dann im Kanal 40 mit Weichkomponente 50 umspritzt und anschliessend mit den Anschlussleitungen 26 der Vibrationsvorrichtung 18 verbunden. Alternativ kann die Vibrationsvorrichtung 18 bereits vorab mit den Leitungen 26' verbunden sein. In diesem Fall sollte der Kanal 40 bis zur Ausnehmung 20 durchgehen und die Vibrationsvorrichtung 18 ebenfalls mit Weichkomponente umspritzt werden. Ein Deckelement 52 ist in diesem Fall entbehrlich.

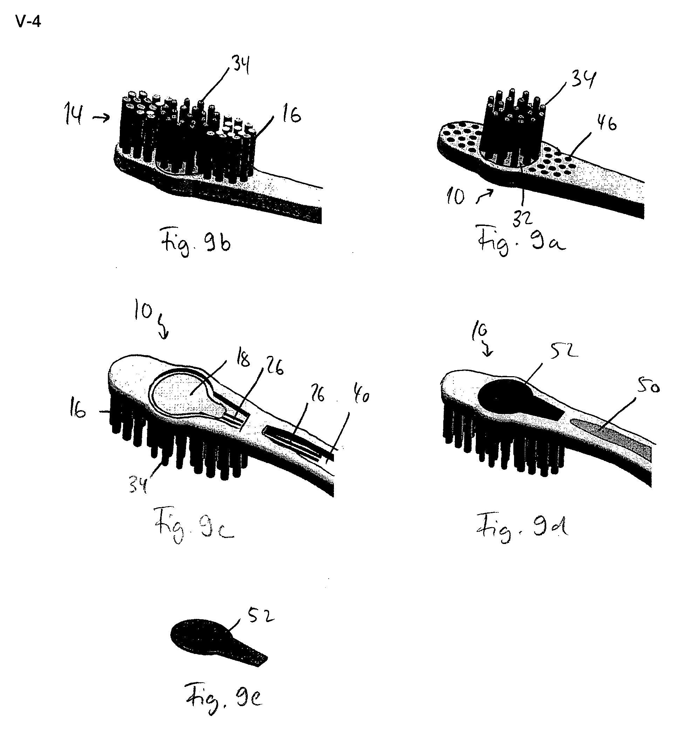

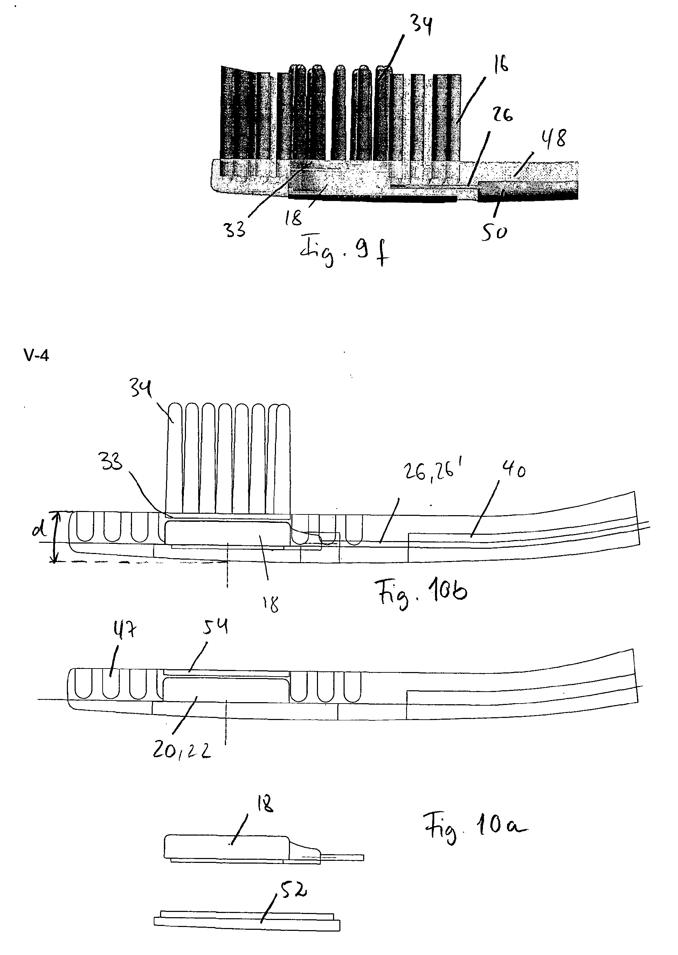

Die in Fig. 9a-f, 10a, b dargestellte Variante 4 ist eine geringfügige Abwandlung von Variante 3, bei der die Kopfdicke weiter minimiert wird, indem oberhalb der Vibrationsvorrichtung 18 bzw. der Ausnehmung 20 ausschliesslich gummielastische Reinigungselemente 34 vorgesehen sind. Konventionelle Borsten 16 mit der dazu notwendigen Verankerungstiefe befinden sich seitlich von der Ausnehmung.

Eine minimale Verankerungstiefe wird durch die Verwendung einer Kunststoffmembrane 33 als Trägerelement für gummielastische Reinigungselemente 34 erreicht. Die resultierende Kopfdicke d von 5-8 mm setzt sich wie folgt zusammen: Gummielastische Membrane 33 zur Halterung der Reinigungselemente 1-2 mm + Vibrationsvorrichtung 3-4 mm + Deckelement 52 1-2 mm.

Die Herstellung von Variante 4 ist analog zu Variante 3 mit der Ergänzung, dass beim Überspritzen des Körpers mit dem zweiten Kunststoff, vorzugsweise der Weichkomponente 50, gleichzeitig die gummielastischen Reinigungselemente an der Frontfläche 28 ausgeformt werden. Dazu wird beim Spritzen der Hartkomponente 48 in der Frontfläche 28 eine flache Ausnehmung 54 gebildet. Der restliche Kopfteil wird konventionell beborstet.

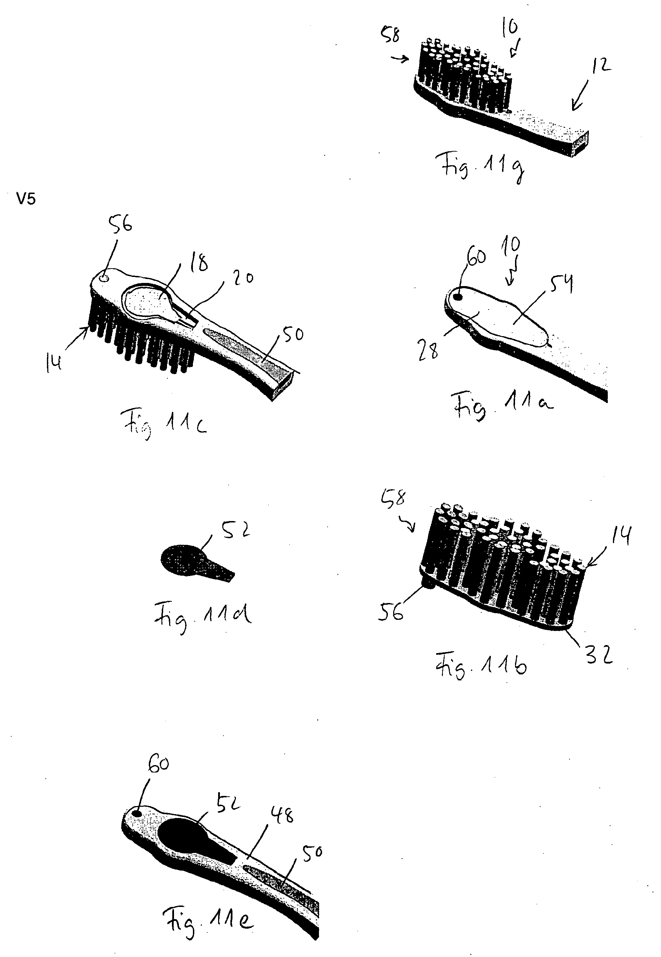

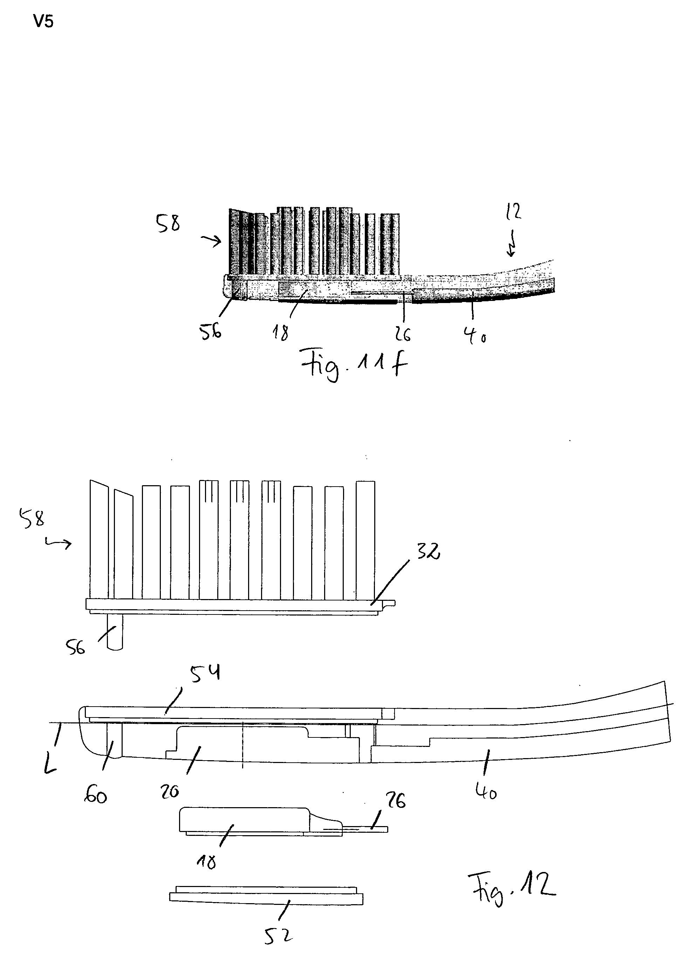

Die in Fig. 11a-g, Fig. 12 dargestellte Variante 5 ist ebenfalls eine geringfügige Abwandlung von Variante 3, bei der eine separate borstentragende Trägerplatte 32 geformt wird, die nicht dauerhaft, sondern als Wechselkopf 58 nur vorübergehend mit dem Kopfteil 10 verbunden wird. Der Kopfteil 10 weist dazu an seiner Frontfläche 28 ein Verankerungsloch 60 auf, in das ein Verankerungsfortsatz 56 am Wechselkopf 58 passend und in klemmender Weise eingreift. Zum Auswerfen steht dieser im montierten Zustand an der Rückseite leicht vor. Der Auswerfermechanismus wird vorzugsweise am vorderen Ende vor der Vibrationseinrichtung positioniert. Die Form der Trägerplatte 32 ist an die Form einer flachen Aussparung 54 in der Frontfläche 28 angepasst. Die Vibrationsvorrichtung 18 wird wie bei Variante 3 auf der borstenabgewandten Rückseite 30 eingesetzt, über der Vibrationseinrichtung wird ein Wechselkopf 58 von der borstentragenden Seite her montiert. Die Ausnehmung 20 auf der Kopfrückseite 30 wird mit einem Deckelement 52 wasserdicht verschweisst.

Um die Kopfdicke d zu minimieren wird ein in IMT, vorzugsweise AFT gefertigter Wechselkopf vorgeschlagen, der eine minimale Verankerungstiefe hat. Die Kopfdicke d von 6-10 mm gemessen im Zentrum der Vibrationsvorrichtung 18 setzt sich zusammen aus: AFT Wechselkopf 1-2 mm, Bürstenkopf 1-2 mm, Vibrationsvorrichtung 3 - 4 mm, Deckelement 1-2 mm.

Um die Vibrationsvorrichtung 18 wasserdicht zu verschliessen, steht die Ausnehmung 54 für den Wechselkopf 58 nicht mit der Ausnehmung 20 für die Vibrationsvorrichtung 18 in Verbindung.

Um den Wechselkopf auswerfen zu können, ist an der Borstenträgerplatte eine durch den ganzen Bürstenkopf hindurch ragender Auswerferstift vorgesehen. Der Auswerfermechanismus wir vorzugsweise vor der Vibrationseinrichtung positioniert.

Statt einen Wechselkopf mit einer Borstenstruktur kann der Körper auch an Wechselelemente mit Interdental-Reinigungselementen angepasst sein, z.B. einen Halter mit einem Zahnstocher, Spiralbürste, Zahnseidenhalterung, Massagenoppen.

Die Herstellung ist analog zu Variante 3, wobei der Schritt zur Beborstung des Kopfes ersetzt wird durch die separate Herstellung und Beborstung des Wechselkopfes 58.

Bei allen Varianten kann die Längsachse L des Kopfbereichs gegenüber der Längsachse des Griffbereichs geneigt sein.

Ebenso kann die die Reinigungsstruktur tragende Frontfläche eine von einer Ebene abweichende Form haben. Anders als in den gezeigten Beispielen, bei denen die Drehachse stets senkrecht zur Frontfläche orientiert ist, kann diese auch einen von 90° verschiedenen Winkel relativ zur Frontfläche 28 einnehmen.

## Patentansprüche

1. Zahnbürste mit einem Körper, der einen Griffbereich , einem eine Reinigungsstruktur (14), insbesondere eine Mehrzahl von Borsten (16), tragenden Kopfbereich (10) mit einer Längsachse (L) und einen dazwischen liegenden Halsbereich (12) aufweist, und mit einer im Kopfbereich (10) angeordneten, den Kopfbereich (10) in Schwingung versetzenden mechanischen Vibrationsvorrichtung (18), die einen Motor mit einem exzentrisch zu einer Drehachse (D) angeordneten Schwungkörper (36) umfasst, **dadurch gekennzeichnet, dass** die Drehachse (D) mit der Längsachse (L) des Kopfbereichs (10) einen Winkel von wenigstens 60° und höchstens 120° einschliesst.

2. Zahnbürste nach Anspruch 1, **dadurch gekennzeichnet, dass** die Drehachse (D) im wesentlichen senkrecht auf der Längsachse (L) des Kopfbereichs (10) steht.

3. Zahnbürste nach einem der vorangegangenen Ansprüche, **dadurch gekennzeichnet, dass** die Dicke (d) des Kopfbereichs (10) im Bereich der Vibrationsvorrichtung (10) in einer Richtung senkrecht zur Längsachse (L) höchstens 15 mm, vorzugsweise höchstens 12 mm beträgt.

4. Zahnbürste nach einem der vorangegangenen Ansprüche, **dadurch gekennzeichnet, dass** die im Bereich der Vibrationsvorrichtung (18) in einer Richtung senkrecht zur Längsachse (L) gemessene Dicke der Vibrationsvorrichtung (18) 25-75% der in derselben Richtung gemessenen Dicke (d) des Kopfbereichs beträgt.

5. Zahnbürste nach einem der vorangegangenen Ansprüche, **dadurch gekennzeichnet, dass** die Vibrationsvorrichtung (18) derart im Kopfbereich (10) angeordnet ist, dass durch die Vibration der Vibrationseinrichtung (18) im Anwendungsfall eine Bewegung des Kopfbereichs (10) erzeugt wird, die im wesentlichen parallel zur Frontfläche (28) des Kopfbereichs (28) verläuft, insbesondere entlang der Längsachse (L) sowie senkrecht zur Längsachse (L).

6. Zahnbürste nach einem der vorangegangenen Ansprüche, **dadurch gekennzeichnet, dass** die Drehachse (D) im wesentlichen senkrecht auf der Frontfläche (28) des Kopfbereichs (10) steht.

7. Zahnbürste nach einem der vorangegangenen Ansprüche, **dadurch gekennzeichnet, dass** der Motor und der Schwungkörper (36) innerhalb einer vorzugsweise zylindrischen Hülse (38) angeordnet sind, deren Ausdehnung entlang der Drehachse (D) kleiner ist als deren Ausdehnung senkrecht zur Drehachse (D), vorzugsweise um ein Vielfaches kleiner.

8. Zahnbürste nach einem der vorangegangenen Ansprüche, **dadurch gekennzeichnet, dass** die Vibrationseinrichtung (18) in einer Ausnehmung (20) im Kopfbereich (10) angeordnet ist.

9. Zahnbürste nach Anspruch 8, **dadurch gekennzeichnet, dass** die Ausnehmung (20) durch ein Deckelement (52) insbesondere wasserdicht verschlossen ist.

10. Zahnbürste nach Anspruch 9, **dadurch gekennzeichnet, dass** das Deckelement (52) wenigstens einen Teil der Reinigungsstruktur (14) trägt.

11. Zahnbürste nach einem der vorangegangenen Ansprüche, **dadurch gekennzeichnet, dass** die Reinigungsstruktur (14) eine Mehrzahl von vom Kopfbereich (10) abstehenden Borsten (16) und/oder weichelastischen Reinigungselementen (34) umfasst und die Drehachse (D) im wesentlichen in Richtung der Borsten bzw. Reinigungselemente orientiert ist.

12. Zahnbürste nach einem der vorangegangenen Ansprüche, **dadurch gekennzeichnet, dass** die Vibrationsvorrichtung (18) wenigstens 10% und höchstens 50% des Volumens des Kopfteils (10) ohne die Reinigungsstruktur (14) und/oder wenigstens 10% und höchstens 50% des Gewichts des Kopfteils (10) einschliesslich der Reinigungsstruktur (14) einnimmt.

13. Zahnbürste nach einem der vorangegangenen Ansprüche, **dadurch gekennzeichnet, dass** die Umdrehungsfrequenz des Motors und Länge, Form und Material der Reinigungsstruktur derart aneinander angepasst gewählt sind, dass wenigstens ein Teil der Reinigungsstruktur beim Betreiben der Vibrationseinrichtung in Resonanz gerät.

14. Zahnbürste nach einem der vorangegangenen Ansprüche, **dadurch gekennzeichnet, dass** sie aus einer als Festigkeitsträger dienenden, im Spritzgussverfahren hergestellten Hartkomponente (48) sowie wenigstens einer im Spritzgussverfahren hergestellten weiteren Kunststoffkomponente (50) besteht.

15. Verfahren zur Herstellung einer Zahnbürste nach einem der vorangegangenen Ansprüche, bei dem
- ein Körper mit einem Griffbereich und einem Kopfbereich (10) aus zumindest einer als Festigkeitsträger dienenden Hartkomponente (48) hergestellt wird;
- bei der Herstellung des Körpers in der Hartkomponente (48) im Kopfbereich (10) eine Ausnehmung (20) für eine Vibrationseinrichtung (18) hergestellt wird;
- die Vibrationseinrichtung (18) in die Ausnehmung (20) im Kopfbereich (10) eingesetzt und die Ausnehmung (20) mit einem Deckelement (52) und/oder durch Überspritzen mit einer weiteren Kunststoffkomponente insbesondere wasserdicht verschlossen wird.

16. Verfahren nach Anspruch 15, **dadurch gekennzeichnet, dass** das Deckelement (52) vor dem Verschliessen der Ausnehmung mit einer Reinigungsstruktur, insbesondere mit Borsten (16) und/oder weichelastischen Reinigungselementen (34) versehen wird.

17. Verfahren nach Anspruch 16, **dadurch gekennzeichnet, dass** das Deckelement (52) im AFT- oder IMT-Verfahren mit einer Mehrzahl von Borsten (16) beborstet wird.

18. Verfahren nach Anspruch 16, **dadurch gekennzeichnet, dass** eine Mehrzahl von weichelastischen Reinigungselementen (34) an das Deckelement (52) angespritzt wird, wobei das Deckelement (52) mit den Reinigungselementen (34) vorzugsweise im Zweikomponenten-Spritzgiessverfahren hergestellt wird.

19. Verfahren nach Anspruch 15, **dadurch gekennzeichnet, dass** die Ausnehmung (20) zu der der Reinigungsstruktur (14) abgewandten Rückseite (30) des Kopfbereichs (10) geöffnet ist, wobei an einer Aussenfläche des Kopfbereichs, die im wesentlichen dem Boden der Ausnehmung (20) entspricht, Borsten (16) angebracht werden und/oder weichelastische Reinigungselemente (34) angespritzt werden.

20. Verfahren nach einem der Ansprüche 15-19, **dadurch gekennzeichnet, dass** der Körper aus zumindest einer als Festigkeitsträger dienenden Hartkomponente (16) sowie wenigstens einer weiteren Kunststoffkomponente, insbesondere einer Weichkomponente (18), im Spritzgiessverfahren hergestellt wird, und wenigstens die Vibrationsvorrichtung und/oder elektrische Verbindungsleitungen während der Herstellung des Körpers (16, 18) zumindest teilweise direkt mit dem die weitere Kunststoffkomponente (18) bildenden Kunststoff umspritzt werden.
